# EUROPEAN PATENT APPLICATION

(11) **EP 2 677 159 A1**
(43) Date of publication of application: **25.12.2013**
(21) Application number: 12746656.3
(22) Date of filing: 18.01.2012
(51) Int. Cl.: F02N 11/08, F02D 29/02, F02N 15/00

(54) **CONTROL DEVICE AND CONTROL METHOD FOR IDLING STOP SYSTEM**

(30) Priority: 17.02.2011 JP 2011032409
(71) Applicant: Hitachi Automotive Systems, Ltd., Hitachinaka-shi Ibaraki 312-8503 (JP)
(72) Inventor: KUNIYOSHI Hiroyasu, Hitachi-shi, Ibaraki 319-1292, (JP); NISHIOKA Akira, Hitachi-shi, Ibaraki 319-1292, (JP); NAKAZATO Shigenori, Hitachinaka-shi, Ibaraki 312-0062, (JP); OMATA Shigehiko, Hitachinaka-shi, Ibaraki 312-8503, (JP)
(74) Representative: MERH-IP Matias Erny Reichl Hoffmann
(86) International application number: PCT/JP2012/051000
(87) International publication number: WO 2012/111376

(57) **Abstract**

An object is to provide a control device and a control method for an idle stop system capable of promptly restarting an engine even when a restart request is issued before pre-mesh. In the idle stop system, the engine is stopped when an idle stop condition is satisfied during engine operation. When a restart request is issued, a pinion 103 of a starter motor 105 is meshed with a ring gear 104 which is connected to a crank shaft of the engine to start cranking to thereby restart the engine. A control device 108 pre-rotates the pinion 103 of the starter motor 105 during an inertial rotation period of the engine until the engine stops. When a restart request of the engine is issued after the termination of pre-rotation energization of the starter motor 103, the pinion 103 of the starter is additionally pre-rotated. Thereafter, the pinion is meshed with the ring gear 104 to start cranking to thereby restart the engine.

## Description

### Technical Field

The present invention relates to a control device and a control method for an idle stop system which automatically stops and restarts an engine, and particularly relates to a control device and a control method for an idle stop system suitable for the application in a pre-mesh type idle stop system.

### Background Art

In recent years, there is a motor vehicle that is equipped with an idle stop system which temporarily stops an engine when a predetermined condition is satisfied during operation for the purpose of saving of energy resources and environmental protection. In the idle stop system, an engine is automatically stopped when a driver stops a vehicle and the like. Thereafter, the engine is automatically restarted when a restart request is issued from the driver, or when an engine operation is required. For restarting an engine, there is a method in which, with the use of a conventional pinion pushing type starter, a pinion is pushed out and thereby brought into mesh with a ring gear which is directly connected to an engine shaft only when starting the engine to thereby start the engine by cranking of the starter. There is an advantage of cost reduction without the need for great design change in employing this method. However, in the method using a starter to start an engine, when a restart request such as pressing down of an accelerator pedal by a driver is issued on the way to the engine stop, it is necessary to connect the starter to the engine in inertial rotation.

On the other hand, there has heretofore been known a method in which a starter is pre-rotated prior to a restart request to thereby previously connect a pinion gear to a ring gear in rotation so that the time required for the restart when the restart request is issued is shortened (see PTL 1, for example). In the following description, connecting a starter and an engine to each other prior to a restart request in preparation for issuance of the restart request is referred to as "pre-mesh", and an idle stop system utilizing this method is referred to as a pre-mesh type idle stop system.

### Citation List

### Patent Literature

PTL 1: Japanese Patent Application Laid-Open No. 2010-242607

### Summary of Invention

### Technical Problem

However, in a conventional pre-mesh method, how to reduce noise which is generated when performing pre-mesh is a big problem. A starter and an engine are connected to each other prior to a restart request. However, when the restart request is not thereafter issued during a period until the engine stops, particularly annoying noise is generated, which makes a driver feel uncomfortable.

In this regard, it has been turned out from studies of the present inventors that the noise generated during pre-mesh greatly varies depending on the rotation speed of an engine at the time of the pre-mesh. More specifically, when the rotation speed of the engine at the time of the pre-mesh is high, rattle noise is generated a plurality of times from a pinion gear with a ring gear of the engine after the pre-mesh due to pulsation of the engine rotation. Therefore, the number of times of generation of the rattle noise after the pre-mesh can be reduced by delaying the timing of the pre-mesh to thereby reduce the rotation speed of the engine at the time of the pre-mesh to some extent. However, the delay of the timing of the pre-mesh leads to delay of restarting the engine in response to a restart request that is issued before the timing of the pre-mesh. As a result, a longer time is required for the restart.

It is therefore an object of the present invention to provide a control device and a control method for an idle stop system capable of promptly restarting an engine in a pre-mesh type idle stop system even when a restart request is issued before performing pre-mesh.

### Solution to Problem

(1) In order to achieve the object, there is provided a control device for an idle stop system according to the present invention. The control device is used in an idle stop system of a type in which an engine is stopped when an idle stop condition is satisfied during engine operation, and a pinion of a starter motor is meshed with a ring gear connected to a crank shaft of the engine when a restart request is issued during an inertial rotation period of the engine until the engine stops to start cranking to restart the engine, wherein the pinion of the starter motor is pre-rotated during the inertial rotation period of the engine until the engine stops, the pinion of the starter motor is additionally pre-rotated when a restart request of the engine is issued after pre-rotation energization of the starter motor is terminated, and the pinion is then meshed with the ring gear to start cranking to restart the engine.

Such a configuration makes it possible to promptly restart an engine in a pre-mesh type idle stop system even when a restart request is issued before performing pre-mesh.

(2) According to (1), it is preferable that when the pinion is connected to the ring gear after the pinion of the starter is additionally pre-rotated in response to issuance of the restart request of the engine, energization of the starter motor is temporarily stopped, and after it is determined that the pinion is completely meshed with the ring gear, the starter motor is again energized to start cranking.

(3) According to (1), it is preferable that when a restart request of the engine is not issued during the inertial rotation period of the engine after the engine is stopped until the engine actually stops, a pre-mesh operation is performed when a pinion plunge determination condition is satisfied.

(4) According to (1), it is preferable that the control device includes pinion rotation speed detection means for detecting a rotation speed of the pinion, wherein fuel injection to the engine is resumed when the restart request is issued, and, after estimating change with time in an engine rotation speed after the fuel injection is resumed, a pushing timing of pinion pushing means is controlled taking delay of the pinion pushing means into consideration so that a difference between a pinion rotation speed converted on the basis of detection by the pinion rotation speed detection means taking a reduction ratio of the pinion to the ring gear into consideration and a rotation speed of the ring gear becomes a predetermined value when the pinion comes into contact with the ring gear.

(5) According to (1), it is preferable that when a restart request of the engine is issued during the pre-rotation energization, the pre-rotation energization is immediately switched to additional pre-rotation energization.

(6) According to (1), it is preferable that when a restart request of the engine is issued before starting the pre-rotation energization, energization for additional pre-rotation is immediately started.

(7) According to (1), it is preferable that additional pre-rotation energization of the starter motor is immediately started in response only to a restart request issued after the engine rotation speed falls below a predetermined engine speed, and the additional pre-rotation energization is started only at a timing in which the engine rotation speed falls below the predetermined engine speed in response to a restart request issued before the engine rotation speed falls below the predetermined engine speed.

(8) In order to achieve the object, according to the present invention, there is provided a control method for an idle stop system of a type in which an engine is stopped when an idle stop condition is satisfied during engine operation, and a pinion of a starter motor is meshed with a ring gear connected to a crank shaft of the engine when a restart request is issued during an inertial rotation period of the engine until the engine stops to start cranking to restart the engine. The method includes: pre-rotating the pinion of the starter motor during the inertial rotation period of the engine until the engine stops; additionally pre-rotating the pinion of the starter motor when a restart request of the engine is issued after pre-rotation energization of the starter motor is terminated, and meshing the pinion with the ring gear to start cranking to restart the engine.

Such a method makes it possible to promptly restart an engine in a pre-mesh type idle stop system even when a restart request is issued before performing pre-mesh.

### Advantageous Effects of Invention

The present invention makes it possible to promptly restart an engine in a pre-mesh type idle stop system even when a restart request is issued before performing pre-mesh.

### Brief Description of Drawings

[FIG. 1] FIG. 1 is a configuration diagram of an idle stop system according to an embodiment of the present invention.
[FIG. 2] FIG. 2 is a flow chart illustrating the operation of a control device for the idle stop system according to the embodiment of the present invention.
[FIG. 3] FIG. 3 is a timing chart illustrating the operation of the control device for the idle stop system according to the embodiment of the present invention.
[FIG. 4] FIG. 4 is a timing chart illustrating the operation of the control device for the idle stop system according to the embodiment of the present invention.
[FIG. 5] FIG. 5 is a timing chart illustrating the operation of the control device for the idle stop system according to the embodiment of the present invention.
[FIG. 6] FIG. 6 is a timing chart illustrating the operation of the control device for the idle stop system according to the embodiment of the present invention.
[FIG. 7] FIG. 7 is a timing chart illustrating the operation of the control device for the idle stop system according to the embodiment of the present invention.
[FIG. 8] FIG. 8 is a timing chart illustrating the operation of the control device for the idle stop system according to the embodiment of the present invention.
[FIG. 9] FIG. 9 is a timing chart illustrating the operation of the control device for the idle stop system according to the embodiment of the present invention.

### Description of Embodiments

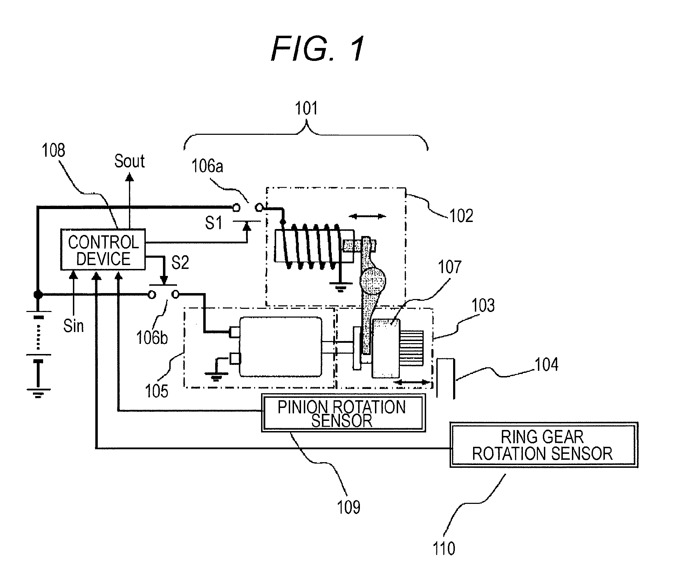

Hereinafter, the configuration and the operation of a control device for an idle stop system according to an embodiment of the present invention will be described with reference to FIGS. 1 to 9.

First, the overall configuration of the idle stop system according to the present embodiment will be described with reference to FIG. 1.

FIG. 1 is a configuration diagram of the idle stop system according to the embodiment of the present invention.

A starter 101 is a so-called pinion pushing type starter. The starter 101 is provided with a motor 105, a pinion 103 which is rotationally driven by the motor 105, and a magnet switch 102 for pushing out the pinion 103.

The rotation of the motor 105 is reduced by a reduction mechanism disposed inside the motor 105 to increase torque, and then transmitted to the pinion 103. When the magnet switch 102 is energized, the pinion gear 103 is connected to a ring gear 104. The magnet switch 102 may be replaced with another member as long as having a function of pushing out the pinion 103 rightward in the drawing. The pinion 103 is integrated with a one-way clutch 107. The pinion 103 is moved rightward in the drawing while maintaining the same rotation shaft as that of the motor 105. Then, the pinion 103 rotates while being meshed with the ring gear 104 which is directly connected to a crank shaft of an engine, thereby starting the engine.

The one-way clutch 107 is configured so as to transmit power only in a direction along which the motor 105 positively rotates the engine. With this configuration, when the pinion 103 is meshed with the ring gear 104, the rotation speed of the ring gear 104 becomes a synchronous speed corresponding to a reduction ratio with respect to the rotation speed of the motor 105, or a speed higher than the synchronous speed. More specifically, when the rotation speed of the ring gear 104 is about to fall below the synchronous speed with respect to the rotation speed of the motor 105, the one-way clutch 107 transmits power to the ring gear 104. Therefore, the rotation speed of the ring gear 104 does not fall below the synchronous speed with respect to the rotation speed of the motor 105. On the other hand, when the rotation speed of the ring gear 104 is higher than the synchronous speed, the one-way clutch 107 does not transmit power to the motor 105. Therefore, power is not transmitted from the ring gear 104 to the motor 105. In the following description, for convenience sake, the rotation speed of the starter motor or the rotation speed of the pinion is defined as the speed of rotation that is converted into rotation on an engine shaft taking a gear ratio between the pinion and the ring gear into consideration.

A pinion rotation sensor 109 detects the rotation speed of the pinion 104. A ring gear rotation sensor 110 detects the rotation speed of the ring gear 104. Signals from the pinion rotation sensor 109 and the ring gear rotation sensor 110 are input to a control device 108. Since the ring gear 104 and the crank shaft of the engine are directly connected to each other, the ring gear rotation speed and the engine rotation speed are synonymous.

The control device 108 permits idle stop according to a vehicle state signal S in which indicates various vehicle states such as a brake pedal state and a vehicle speed, outputs a control signal Sout to the engine, and stops fuel supply to the engine, in addition to a normal fuel injection, ignition, and pneumatic control (electronic control throttle). Further, a pinion pushing-out instruction signal S1 and a motor rotation instruction signal S2 are independently output from the control device 108. The pinion pushing-out instruction signal S1 and the motor rotation instruction signal S2 are input to a switch 106a and a switch 106b, respectively, thereby controlling the pushing-out of the pinion and the rotation of the motor, respectively. A relay switch having a mechanical contact, a switch using a semiconductor and the like can be utilized as the switches 106a and 106b.

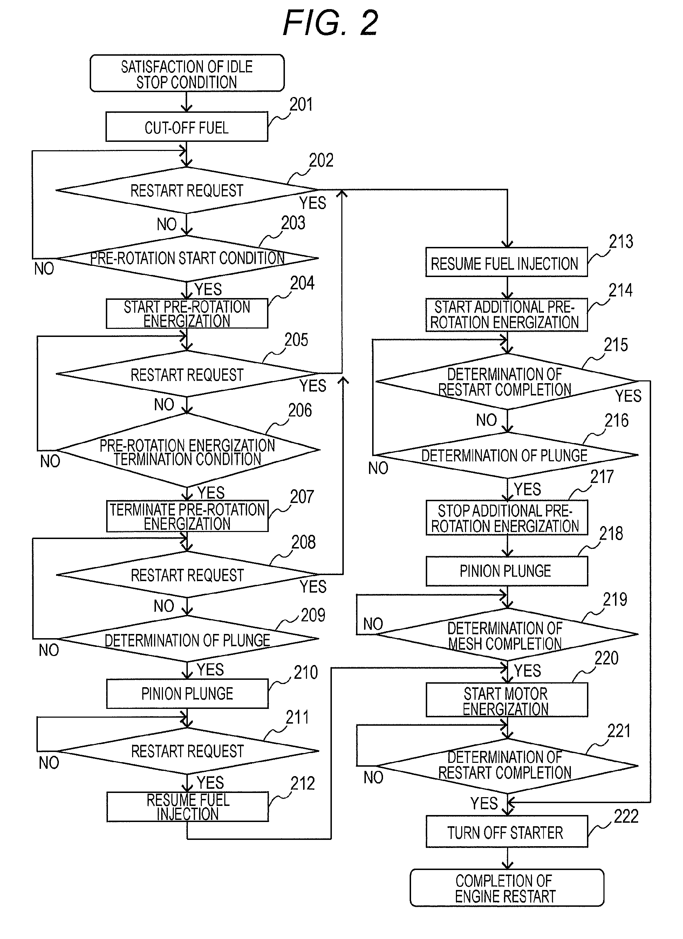

Next, the operation of the control device for the idle stop system according to the present embodiment will be described with reference to FIGS. 2 to 9.

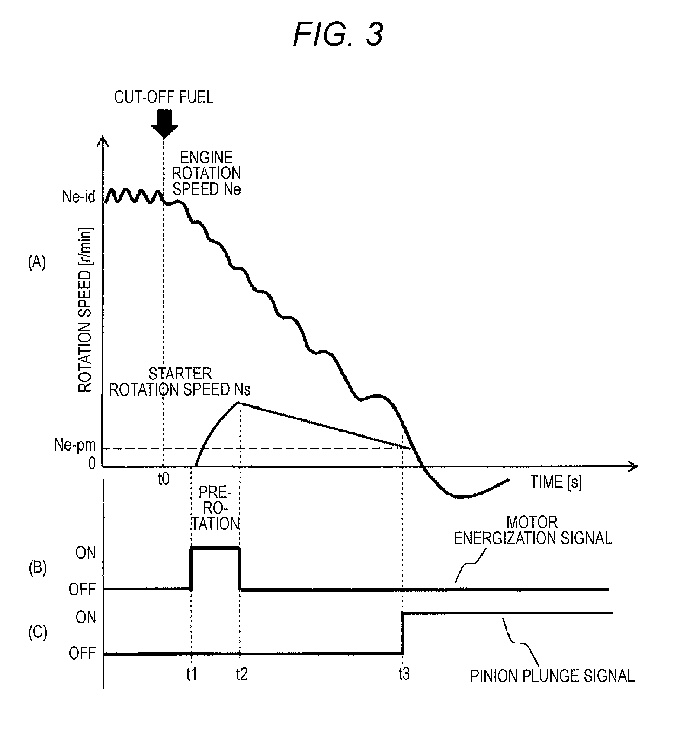

FIG. 2 is a flow chart illustrating the operation of the control device for the idle stop system according to the embodiment of the present invention. FIGS. 3 to 8 are timing charts each illustrating the operation of the control device for the idle stop system according to the embodiment of the present invention.

First, with reference to FIGS. 2 and 3, a control flow in a case where an engine restart request is not issued during a period after cutting-off fuel to the engine in response to satisfaction of an idle stop condition until performing pre-mesh. FIG. 3 (A) illustrates changes with time in an engine rotation speed Ne and a starter rotation speed Ns when the control is performed. Each of FIGS. 3(B) and 3 (c) illustrates an example of an output signal from the control device at the above time (FIG. 3 (B) : a motor energization signal; FIG. 3(C) : a pinion plunge signal).

As shown in the flow chart of FIG. 2, in response to satisfaction of the idle stop condition, the control device 108 first stops fuel supply to the engine in step 201. The idle stop condition is satisfied when, for example, a vehicle speed signal included in the vehicle state signal Sin is zero and a signal indicating that a brake pedal is pushed down is input. In order to stop fuel supply to the engine, the control device 108 outputs a signal for reducing a fuel injection amount to zero as an engine control signal Sout to a fuel injection device.

When the fuel supply is stopped at a time t0 by the process of step 201, the engine continues to inertially rotate while pulsating, and the engine rotation speed Ne is gradually reduced as shown in FIG. 3. In FIG. 3, an engine rotation speed Ne-id before the fuel cut-off is an idle rotation speed of the engine. Although the idle rotation speed varies in some degree depending on the type of an engine, it is, for example, a few hundred rpm.

Thereafter, when a pre-rotation start condition is satisfied in step 203 of FIG. 2, the control device 108 outputs the motor rotation instruction signal S2 shown in FIG. 1 in a pulse form for a predetermined period of time as shown in FIG. 3 (B) to energize the starter motor 105, thereby rotating the starter motor 105 for a predetermined period of time in step 204. The satisfaction of the pre-rotation start condition is determined, for example, by the condition that the engine rotation speed has fallen below a predetermined rotation speed. Further, the satisfaction of the pre-rotation start condition may also be determined by the fact that a certain period of time has passed from the timing of the fuel supply cut-off performed in response to the satisfaction of the idle stop condition. Further, when the starter motor 105 is energized as shown in FIG. 3(B), the rotation speed Ns of the starter motor starts to increase from a time t1 as shown in FIG. 3(A). The rotation caused by this energization is referred to as "pre-rotation".

Next, after the pre-rotation start determination condition is satisfied and the energization is therefore started in step 203, when a pre-rotation energization termination condition is satisfied in step 206, the control device 108 terminates the pre-rotation energization in step 207. After the energization is terminated at a time t2 as shown in FIG. 3(B), the starter motor continues to inertially rotate as shown in FIG. 3(A). Examples of the pre-rotation energization termination condition include a condition in which a certain period of time has passed from the start of the pre-rotation, a condition in which the rotation speed of the starter motor has reached a certain speed, and a condition in which a difference between the rotation speed of the starter motor and the rotation speed of the engine has become equal to or lower than a predetermined value.

After the pre-rotation energization is terminated in step 207, the starter motor continues to inertially rotate. Thereafter, when a predetermined pinion plunge determination condition is satisfied in step 209, the control device 108 outputs a pinion plunge signal S1 at a time t3 as shown in FIG. 3 (C) to cause the pinion to plunge so that the pinion in inertial rotation is meshed with the ring gear in inertial rotation to thereby perform pre-mesh. The pinion plunge determination in step 209 will be described in detail later. After the pre-mesh is performed, the meshed state of the pinion with the ring gear is maintained even after the engine stops. The pinion plunge operation in steps 209 and 210 is not necessarily performed. When the pinion plunge operation is not performed, and an engine restart request is not issued, the pinion is not meshed with the ring gear, and each of the pinion and the ring gear stops after the completion of the inertial rotation.

In an example shown in FIG. 3(A), an engine rotation speed Ne-pm1 at the time of the pre-mesh is considerably lower than the idle rotation speed. Therefore, the number of times of generation of rattle noise after the pre-mesh can be reduced, thereby making it possible to reduce noise generated during the pre-mesh.

Further, in a restart request determination in step 211, determination is made by the control device 108 with respect to a restart request that is issued after performing the pre-mesh. Then, the control device 108 resumes the fuel injection in step 212, and also immediately starts energization of the starter motor in step 220 so that cranking is started to restart the engine. Since the meshed state of the pinion with the ring gear is maintained after the pre-mesh, torque is transmitted to the engine by immediately energize the motor. When the control device 108 determines, in step 221, that the restart of the engine is completed, the control device 108 then stops energization of the magnet switch and the motor to thereby turn off the starter in step 222. The determination of the engine restart completion in step 221 can be performed, for example, by determining that the engine rotation speed has exceeded a certain value.

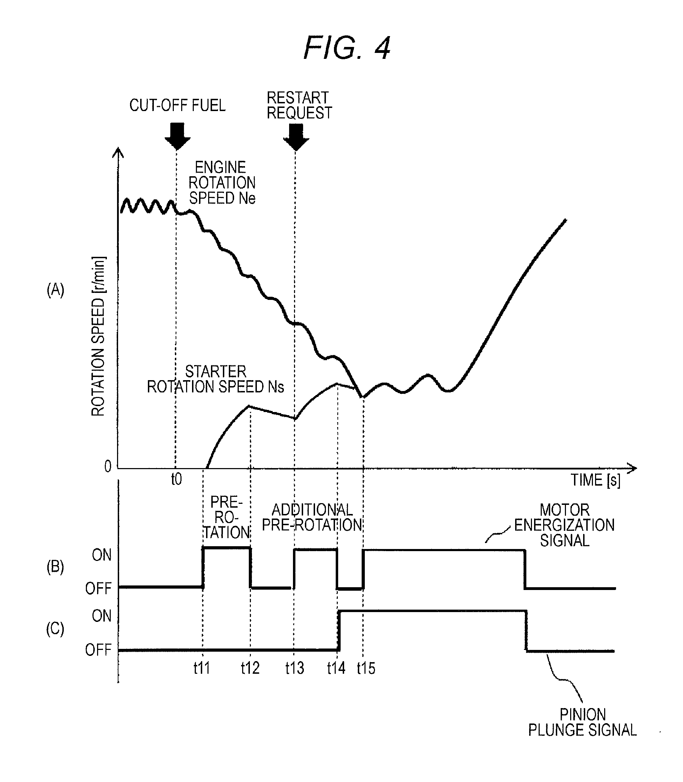

Next, control in a case where a restart request is issued before the pre-mesh operation during a period until the engine rotation stops will be described with reference to FIGS. 2 and 4. FIG. 4(A) illustrates control in a case where an engine restart request is issued while the starter motor continues to inertially rotate after the termination of the pre-rotation energization, and changes with time in the engine rotation speed and the starter rotation speed in such a case. Each of FIGS. 4 (B) and 4 (C) illustrates an example of an output signal from the control device at the above time (FIG. 4 (B) : the motor energization signal; FIG. 4(C): the pinion plunge signal).

The start of the pre-rotation energization in step 204 is performed at a time t11, and the termination of the pre-rotation energization in step 207 is performed at a time t12. Then, in step 208 of FIG. 2, determination is made by the control device 108 with respect to a restart request that is issued while the starter motor continues to inertially rotate after the termination of the pre-rotation energization. Thereafter, the fuel injection to the engine is resumed in step 213, and energization of the starter motor is performed in step 214. The determination of the restart request is performed, for example, by determining that a brake pedal that has been pushed down is released. Such immediate start of the energization of the motor in response to the issuance of the restart request is referred to as "additional pre-rotation energization". When the engine restart request is issued at a time t13 of FIG. 4(A), the additional pre-rotation energization is immediately performed in response thereto, and the energization of the starter motor is performed until a time t14 as shown in FIG. 4(B). Accordingly, the rotation speed of the starter motor is again increased and comes close to the engine rotation speed.

The present embodiment is characterized by the immediate start of the additional pre-rotation energization of the starter motor in response to the restart request. The fuel injection to the engine is resumed at the same time as the start of the additional pre-rotation energization. Then, when a predetermined pinion plunge determination condition is satisfied in step 216, the control device 108 stops the additional pre-rotation energization at a time t14 of FIG. 4 (B) in step 217, and, at the same time, causes the pinion to plunge so as to be meshed with the ring gear in step 218 as shown in FIG. 4(C). The pion plunge determination in step 216 will be described in detail later.

Then, when the control device 108 determines, in step 219, that the mesh of the pinion with the ring gear is completed, energization of the starter motor is restarted at a time t15 of FIG. 4(B) in step 220 so that torque is transmitted to the engine to thereby start cranking. The determination of the completion of the mesh in step 219 is performed, for example, by determining that a certain period of time has passed from the pinion plunge. Further, it is also possible to detect movement of the pinion by using a sensor or the like to determine that the pinion is meshed with the ring gear.

The control device 108 performs the determination of the engine restart completion in step 221. When it is determined that the restart is completed, the control device 108 stops energization of the magnet switch and the motor to thereby turn off the starter in step 222. The determination of the engine restart completion can be performed, for example, by determining that the engine rotation speed has exceeded a certain value.

An engine rotation speed Ne-pm2 at the time of the pre-mesh in this case is higher than the engine rotation speed Ne-pm1 at the time of the pre-mesh in the case shown in FIG. 3. Therefore, noise generated at the time of the pre-mesh may become loud. However, since fuel is supplied to the engine following the pre-mesh and explosion of the fuel thereby occurs, the noise is actually recognized as a part of the successive noises. Therefore, the noise is not so annoying to hear for a driver. On the other hand, in the case of the pre-mesh shown in FIG. 3, since the engine is not thereafter restarted, the pre-mesh is performed in quiet surrounding. Therefore, noise generated at the time of the pre-mesh in this case is easily perceived by ears of a driver.

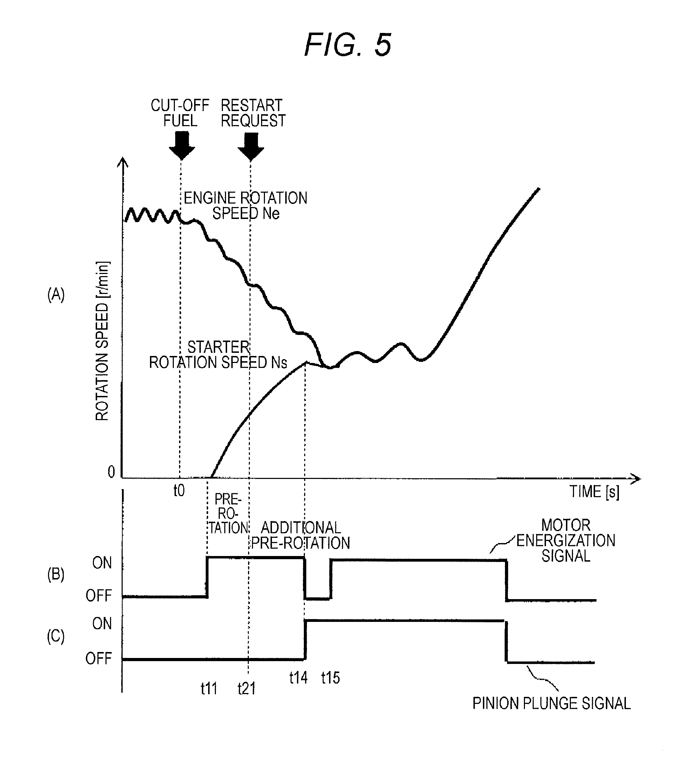

Next, control with respect to a restart request that is issued during the pre-rotation will be described with reference to FIGS. 2 and 5. The vertical axes of FIGS. 5(A) to 5 (C) are the same as the vertical axes of FIGS. 3 (A) to 3 (C).

As shown in a time t21 of FIGS. 5 (A) and 5(B), determination is made by the control device 108 with respect to a restart request that is issued during the pre-rotation energization in step 205 of the flow chart. Then, the fuel injection is resumed in step 213, and the additional pre-rotation energization is started in step 214 in the same manner as in the above case where the restart request is issued after the pre-rotation. In this case, since energization is switched to the additional pre-rotation energization during the pre-rotation energization, it can be apparently seen that the energization is continuously performed from the start of the pre-rotation energization as shown in FIG. 5(B). Then, in the same manner as in the above case where the restart request is issued after the pre-rotation, when the plunge determination condition is satisfied in step 216, the energization of the motor is stopped in step 217, and the pinion is caused to plunge in step 218. Thereafter, the engine is restarted in the same manner as in the above case where the restart request is issued after the pre-rotation.

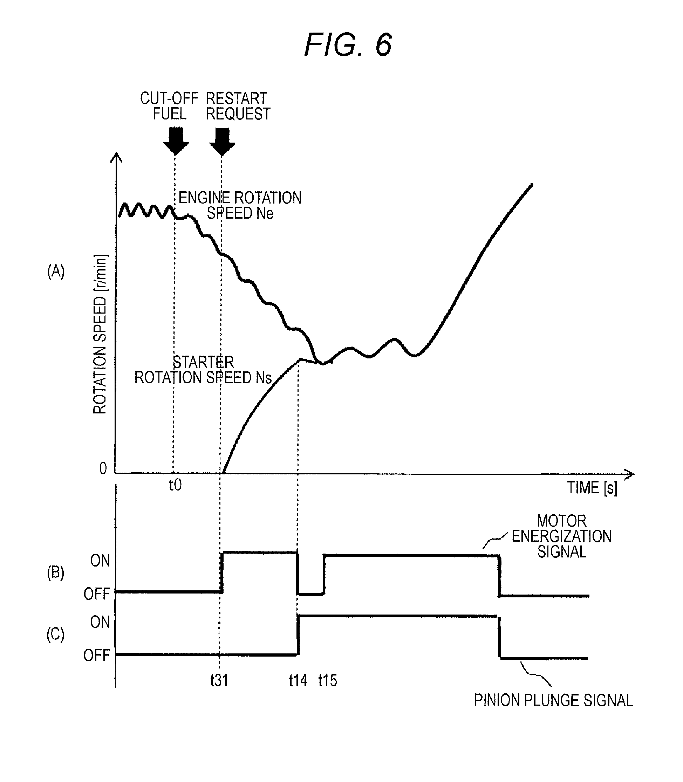

Next, control with respect to a restart request that is issued before the pre-rotation will be described with reference to FIGS. 2 and 6. The vertical axes of FIGS. 6(A) to 6 (C) are the same as the vertical axes of FIGS. 3 (A) to 3 (C).

As shown in a time t31 of FIGS. 6 (A) and 6(B), determination is made by the control device 108 with respect to a restart request that is issued before the timing of the start of the pre-rotation energization in step 202 of FIG. 2. Then, the fuel injection is resumed in step 213, and the additional pre-rotation energization is started in step 214 in the same manner as in the above case where the restart request is issued after the pre-rotation. In this case, as shown in FIG. 6(B), the energization of the starter motor is started only after the restart request is issued at the time t31. Then, in the same manner as in the above case where the restart request is issued after the pre-rotation, when the plunge determination condition is satisfied in step 216, the energization of the motor is stopped in step 217, and the pinion is caused to plunge in step 218. Thereafter, the engine is restarted in the same manner as in the above case where the restart request is issued after the pre-rotation.

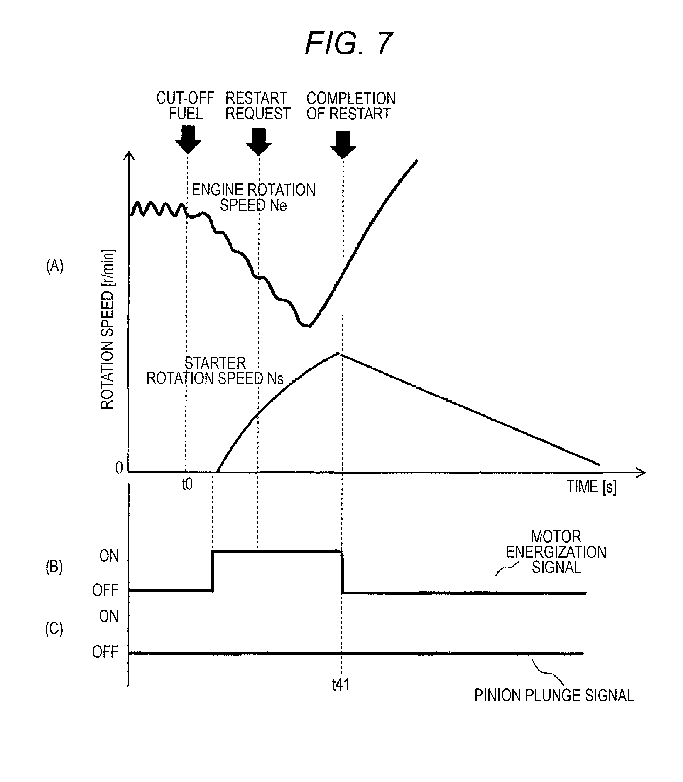

Next, control with respect to a restart request that is issued while the engine is inertially rotating at a certain degree of speed will be described with reference to FIGS. 2 and 7. In the case of the restart request that is issued at such timing, the engine can be restarted without help of the starter only by resuming the fuel injection.

The restart of the engine by resuming the fuel injection is determined by the control device 108 during the additional pre-rotation in step 215 of the flow chart. The determination of completion of the restart can be performed, for example, by determining that the engine rotation speed has exceeded a predetermined rotation speed.

When the control device 108 determines, in step 215, that the restart is completed at a time t41 of FIGS. 7, the energization of the motor is terminated in step 222. When the engine can be restarted only by resuming the fuel injection in this manner, the pinion and the ring gear are not eventually connected to each other, and the starter motor may therefore run idle.

In the example of the control flow shown above, the additional pre-rotation energization is started immediately after the issuance of the restart request. However, if the engine rotation speed is still high, the engine restart by resuming the fuel injection is expected. Therefore, the additional pre-rotation energization of the starter motor may be started in response only to a restart request that is issued after the engine rotation speed has fallen below a predetermined engine rotation speed. In this case, the engine restart by resuming the fuel injection cannot be performed in response to a restart request that is issued before the engine rotation speed has fallen below the predetermined engine rotation speed. Therefore, the additional pre-rotation energization is started only at the timing in which the engine rotation speed falls below the predetermined engine rotation speed, and the restart by the starter motor is performed in the same manner as above.

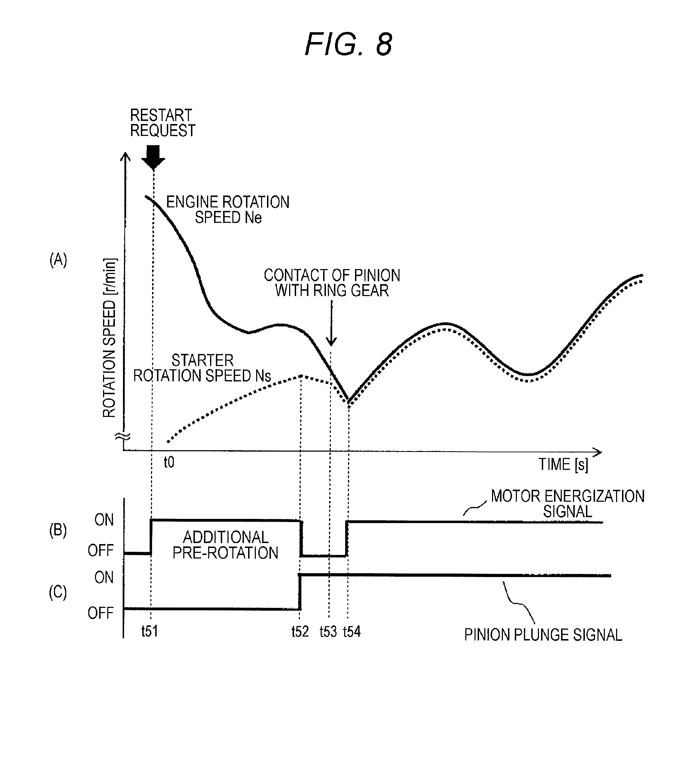

Next, the pinion plunge determinations in step 209 and step 216 of FIG. 2 will be described with reference to FIG. 8. The pion plunge determinations in step 209 and step 216 may be the same determination.

FIG. 8 (A) illustrates, in more detail, changes with time in the engine rotation speed and the pinion rotation speed when the pion plunge determination in step 216 is performed. FIG. 8 (B) illustrates the motor energization signal, and FIG. 8 (C) illustrates the pinion plunge signal.

As shown in FIG. 8, the control device 108 performs the additional pre-rotation energization of the starter motor in response to a restart request issued at a time t51. Then, when the plunge determination in step 216 is performed at the timing of a time t52 of FIG. 8, the control device 108 stops the additional pre-rotation energization and, at the same time, outputs the pinion plunge signal, so that the pinion starts to plunge.

In the determination of the pinion plunge, a plunge timing is determined by estimating a future engine rotation speed and taking a delay time of the movement of the pinion into consideration. There is a delay time between a time the pinion plunge signal is output and a time the pinion actually reaches the ring gear, and the engine rotation speed drastically changes during the delay time. By estimating the change in the engine rotation taking pulsation thereof into consideration, a difference in speed between the pinion and the ring gear at the timing in which the pinion comes into contact with the ring gear can be reduced, thereby achieving smooth mesh therebetween. For example, although, in the example shown in FIG. 8, the pinion plunge signal is output at the timing of the time t52, the pinion actually comes into contact with the ring gear at the timing of the time t53. The pinion plunge signal is output after estimating, at the stage of the timing of the time t52, an engine rotation speed at the timing of the time t53, and also estimating that a difference between the pinion rotation speed and the ring gear rotation speed falls within a predetermined value at the timing of the time t53 in the pinion plunge determination. Then, it is determined at the timing of a time t54 that the pinion has been completely meshed with the ring gear, and the starter motor is again energized to thereby start cranking.

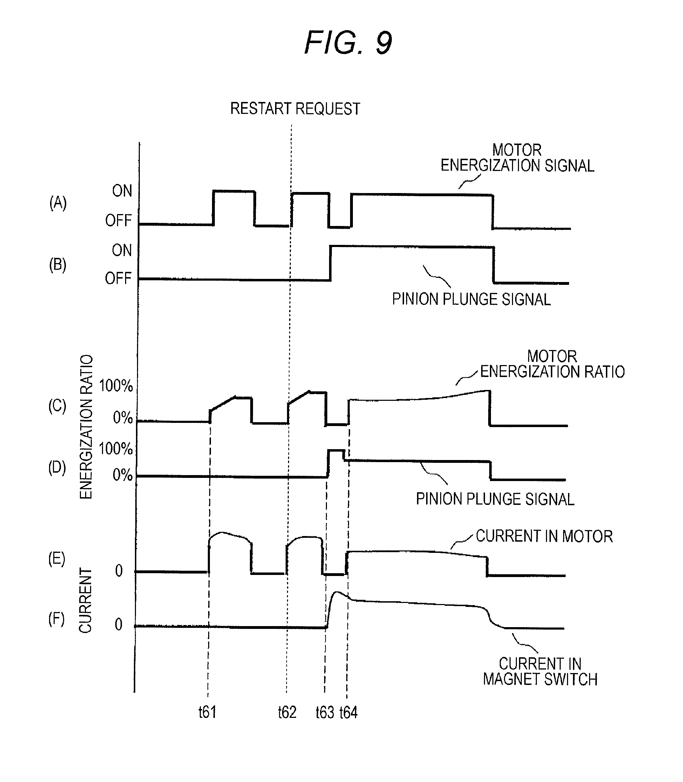

Next, a method for energizing the motor and the magnet switch will be described with reference to FIG. 9. FIG. 9 (A) illustrates a motor energization signal when an on/off switch is used. FIG. 9(B) illustrates a pinion plunge signal when an on/off switch is used. Each of FIGS. 9(C) to 9(F) illustrates a case where a switching element that is capable of changing a switching ratio is used. FIG. 9(C) illustrates an energization ratio of the motor. FIG. 9(D) illustrates an energization ratio of the pinion plunge signal. FIG. 9(E) illustrates current in the motor. FIG. 9(F) illustrates current in the magnet switch.

When a switching element such as a semiconductor switching element is used in an energization circuit, the motor energization signal and the pinion plunge signal illustrated in FIG. 1 may also be substituted by changing the switching ratio.

FIG. 9 shows an example in which the restart request is issued at the timing of a time t61. When the switching element is used, the energization ratios are changed as shown in FIGS. 9 (C) and 9(D). Specifically, as shown in FIG. 9(C), when the energization of the motor is performed at the time t61 and a time t62, current is first applied to the motor in a stepwise manner from 0% to approximately 50%. Then, the current is gradually increased until the energization ratio reaches 100%. When the switching element is used, too much current may flow at the start of energization. Therefore, such energization control makes it possible to prevent too much current from flowing in the motor. Further, when energization of the starter motor is performed for cranking at a time t64, the energization ratio at the beginning of the energization is, for example, approximately 70%. Accordingly, when current is applied also to accessories, it is possible to prevent the operations of the accessories from stopping. Further, the energization ratio of the pinion plunge signal is first made to be approximately 70% at a time t63. As a result, the plunge speed of the pinion at the time of the plunge can be made slow, thereby making it possible to weaken the impact force when the pinion collides against the ring gear.

FIG. 9(E) illustrates an example of current flowing in the motor and FIG. 9(F) illustrates an example of current flowing in the magnet switch when the energization ratios are controlled as described above. When the switching element is used, current flowing in the starter motor can be reduced, which produces an effect of improving the durability of a battery and reducing an influence on power supply to another electric device.

As described above, the present embodiment makes it possible to reduce the time required for the restart. Reference Signs List

- 101: starter body
- 102: magnet switch
- 103: pinion
- 104: ring gear
- 105: starter motor
- 106a: magnet switch energization switch
- 106b: starter motor energization switch
- 107: one-way clutch
- 108: control device
- 109: crank angle sensor
- 110: pinion rotation sensor
- 111: ring gear rotation sensor

## Claims

1. A control device for an idle stop system, the control device being used in an idle stop system of a type in which an engine is stopped when an idle stop condition is satisfied during engine operation, and a pinion of a starter motor is meshed with a ring gear connected to a crank shaft of the engine when a restart request is issued during an inertial rotation period of the engine until the engine stops to start cranking to restart the engine, wherein the pinion of the starter motor is pre-rotated during the inertial rotation period of the engine until the engine stops, the pinion of the starter motor is additionally pre-rotated when a restart request of the engine is issued after pre-rotation energization of the starter motor is terminated, and the pinion is then meshed with the ring gear to start cranking to restart the engine.

2. The control device for the idle stop system according to claim 1, wherein when the pinion is connected to the ring gear after the pinion of the starter is additionally pre-rotated in response to issuance of the restart request of the engine, energization of the starter motor is temporarily stopped, and after it is determined that the pinion is completely meshed with the ring gear, the starter motor is again energized to start cranking.

3. The control device for the idle stop system according to claim 1, wherein when a restart request of the engine is not issued during the inertial rotation period of the engine after the engine is stopped until the engine actually stops, a pre-mesh operation is performed when a pinion plunge determination condition is satisfied.

4. The control device for the idle stop system according to claim 1 comprising pinion rotation speed detection means for detecting a rotation speed of the pinion, wherein fuel injection to the engine is resumed when the restart request is issued, and, after estimating change with time in an engine rotation speed after the fuel injection is resumed, a pushing timing of pinion pushing means is controlled taking delay of the pinion pushing means into consideration so that a difference between a pinion rotation speed converted on the basis of detection by the pinion rotation speed detection means taking a reduction ratio of the pinion to the ring gear into consideration and a rotation speed of the ring gear becomes a predetermined value when the pinion comes into contact with the ring gear.

5. The control device for the idle stop system according to claim 1, wherein when a restart request of the engine is issued during the pre-rotation energization, the pre-rotation energization is immediately switched to additional pre-rotation energization.

6. The control device for the idle stop system according to claim 1, wherein when a restart request of the engine is issued before starting the pre-rotation energization, energization for additional pre-rotation is immediately started.

7. The control device for the idle stop system according to claim 1, wherein additional pre-rotation energization of the starter motor is immediately started in response only to a restart request issued after the engine rotation speed falls below a predetermined engine speed, and the additional pre-rotation energization is started only at a timing in which the engine rotation speed falls below the predetermined engine speed in response to a restart request issued before the engine rotation speed falls below the predetermined engine speed.

8. A control method for an idle stop system of a type in which an engine is stopped when an idle stop condition is satisfied during engine operation, and a pinion of a starter motor is meshed with a ring gear connected to a crank shaft of the engine when a restart request is issued during an inertial rotation period of the engine until the engine stops to start cranking to restart the engine, the method comprising:
pre-rotating the pinion of the starter motor during the inertial rotation period of the engine until the engine stops;
additionally pre-rotating the pinion of the starter motor when a restart request of the engine is issued after pre-rotation energization of the starter motor is terminated; and
meshing the pinion with the ring gear to start cranking to restart the engine.
